Europäisches Patentamt

European Patent Office

Office européen des brevets

(11) Veröffentlichungsnummer: **0 254 841**
**A2**

(12) **EUROPÄISCHE PATENTANMELDUNG**

(21) Anmeldenummer: 87108029.7

(22) Anmeldetag: 03.06.87

(51) Int. Cl.³: **B 01 D 33/10**

(30) Priorität: 03.06.86 DE 3618555

(43) Veröffentlichungstag der Anmeldung:
03.02.88 Patentblatt 88/5

(84) Benannte Vertragsstaaten:
AT CH FR IT LI NL

(71) Anmelder: Tecpro-Handels GmbH
Thalkirchner Strasse 106
D-8000 München 2(DE)

(72) Erfinder: Breitsameter, Kaspar
Hohleneich
D-8901 Dasing(DE)

(74) Vertreter: Patentanwälte Kirschner & Grosse
Forstenrieder Allee 59
D-8000 München 71(DE)

(54) Vorrichtung zum Abscheiden fester Gegenstände aus Gülle.

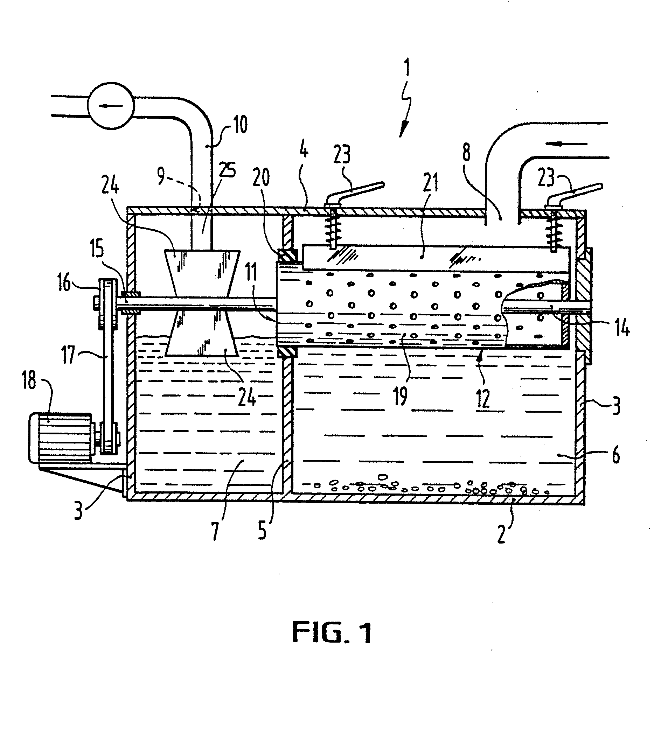

㊗ Die Vorrichtung (1) besteht aus einem mit einem Güllebehälter oder einem Stall verbundenen Absetzbecken (6)und einem durch eine Zwischenwand abgetrennten Speicherbecken (7), mit dem eine nachfolgende Güllepumpe verbunden ist. In der Zwischenwand (5) ist eine Durchlaßöffnung (11) ausgebildet, in die eine sich stetig drehende Siebtrommel (12) dicht eingreift, deren abgewandte Stirnseite verschlossen ist. Die dem Absetzbecken (6) zugeführte Gülle tritt durch die Löcher in der zylindrischen Wandung (19) der Siebtrommel (12) in deren Innenraum und von dort durch die Durchlaßöffnung (11) in das Speicherbecken (7) ein, wobei feste Gegenstände, die größer als der Lochdurchmesser sind, in dem Absetzbecken (6) zurückbleiben. Dadurch ist ausgeschlossen, daß feste Gegenstände in die Güllepumpe eingesaugt werden und sie beschädigen (Fig. 1).

FIG. 1

EP 0 254 841 A2

Vorrichtung zum Abscheiden fester Gegenstände aus Gülle

Die Erfindung betrifft eine Vorrichtung zum Abscheiden fester Gegenstände aus Gülle.

Üblicherweise wird die in einem Stall anfallende Gülle in einem offenen Kanal zu einem Güllebehälter geführt, wo sie sich ansammelt, um ab und zu mittels einer Güllepumpe abgesaugt und zu einem Güllewagen befördert zu werden. Dabei ist es unvermeidlich, daß zusammen mit der Gülle feste Gegenstände wie zum Beispiel Nägel, Schrauben, Steine, aber auch Holzstücke und ähnliche, auf Gülle schwimmende Gegenstände in den Güllebehälter gelangen. Wenn diese festen Gegenstände in die Güllepumpe gelangen, kann es leicht zu einer Beschädigung der Pumpe kommen, wobei die Reparatur einer derartigen Güllepumpe mit erheblichen Kosten verbunden ist.

Der Erfindung liegt die Aufgabe zugrunde, eine Vorrichtung anzugeben, mit der die Beschädigung einer Güllepumpe durch mit der Gülle angesaugte feste Gegenstände mit Sicherheit vermieden ist.

Diese Aufgabe wird erfindungsgemäß durch die im Kennzeichen des Patentanspruchs 1 angegebenen Merkmale gelöst.

Die Erfindung sieht vor, daß eine Vorrichtung zum Abscheiden fester Gegenstände vor der Güllepumpe angeordnet ist. Diese Vorrichtung kann dem eigentlichen mit dem Stall verbundenen Güllebehälter nachgeordnet sein, wobei die Gülle von dem Güllebehälter in die Vorrichtung fließt. Die erfindungsgemäße Vorrichtung kann aber auch an die Stelle des bisher üblichen Güllebehälters treten, indem sie direkt über einen Kanal mit dem Stall verbunden ist. In der erfindungsgemäßen Vorrichtung werden in der zugeflossenen Gülle mitgeführte feste Gegenstände aus der von der Güllepumpe angesaugten Gülle abgeschieden, so daß diese Gefahrenquelle für die Güllepumpe mit Sicherheit ausgeschaltet ist.

Mit großem Vorteil ist vorgesehen, daß die Vorrichtung ein Absetzbecken, das mit dem Güllebehälter oder dem Stall verbunden ist, und ein durch eine Zwischenwand abgetrenntes Speicherbecken aufweist, das mit der Pumpe verbunden ist. Durch diese Einteilung der erfindungsgemäßen Vorrichtung können die festen Gegenstände so abgeschieden werden, daß sie nicht in den Sog der Pumpe gelangen können. Im Speicherbecken der erfindungsgemäßen Vorrichtung steht während des Normalbetriebs stets Gülle zum Absaugen zur Verfügung.

Die Erfindung schlägt ferner vor, daß das Absetzbecken und das Speicherbecken über eine in der Zwischenwand ausgebildete Durchlaßöffnung und eine damit verbundene Abscheideeinrichtung für die festen Gegenstände miteinander in Verbindung stehen. Die Abscheideeinrichtung ist vorzugsweise eine auf einer umlaufenden Welle befestigte Siebtrommel, die in dem Absetzbecken angeordnet ist und mit einem stirnseitigen Endabschnitt ihrer zylindrischen Wandung dicht mit dem Rand der Durchlaßöffnung abschließt. Die aus dem Güllebehälter oder direkt aus dem Stall zufließende Gülle, die zuweilen die für die Güllepumpe schädlichen festen Gegenstände mit sich führt, gelangt somit zunächst in das Absetzbecken, in der als Abscheideeinrichtung die Siebtrommel angeordnet ist, die stetig mit langsamer Geschwindigkeit umläuft. Wenn der Güllespiegel in dem Absetzbecken die vorzugsweise im oberen Bereich angeordnete Siebtrommel erreicht, tritt die Gülle durch die gelochte Wandung der Siebtrommel in deren Innenraum ein, der über die Durchlaßöffnung in der Zwischenwand zwischen dem Absetzbecken und dem Speicherbecken mit letzterem in Verbindung steht. Die in das Absetzbecken gelangten festen Gegenstände, die abgeschieden werden sollen, können dann, wenn sie größer als der auf ein geeignetes Maß festgesetzte Durchgangsquerschnitt sind, nicht in den Innenraum der Siebtrommel gelangen, was ersichtlicherweise sowohl für die in der Gülle absinkenden, schweren Gegenstände als auch für die schwimmfähigen Gegenstände zutrifft. Wichtig ist dabei, daß die zylindrische Wandung der Siebtrommel dicht mit dem Rand der Durchlaßöffnung abschließt, wozu eine besondere Dichtung vorgesehen sein kann. Der stirnseitige Endabschnitt der Siebtrommel kann dabei geringfügig in das Speicherbecken hineinragen, wobei diese Stirnseite zum Speicherbecken hin offen ist. Die andere Stirnseite der Siebtrommel, die in dem Absetzbecken angeordnet ist, ist durch eine Stirnwand verschlossen.

Die Siebtrommel ist gegen eine Siebtrommel mit anderen Durchgangsquerschnitten auswechselbar, so daß eine Anpassung an eine unterschiedliche Flüssigkeitszusammensetzung möglich ist. Die Auswechslung erfolgt durch Wegnahme einer Abdeckvorrichtung, die sich in der Stirnwand des Absetzbeckens befindet und in welcher die Siebtrommelwelle gelagert ist.

Die Siebtrommelwelle kann über einen außerhalb der Vorrichtung angeordneten Riementrieb angetrieben werden, wozu ein aus einer Seitenwand der Vorrichtung herausragender Endabschnitt der Welle mit einer Riemenscheibe versehen werden kann.

Die Siebtrommel hat zweckmäßigerweise eine langgestreckte zylindrische Wandung, die als Sieb mit Öffnungen versehen ist. Die festen Gegenstände, die kleiner als ein bevorzugter Durchgangsquerschnitt sind, sind erfahrungsgemäß unschädlich für die Güllepumpe. Durch den andererseits noch groß genug gewählten Durchgangsquerschnitt ist erreicht, daß die Löcher der Siebtrommel von der Gülle nicht ohne weiteres zugesetzt werden. Einem derartigen Zusetzen der Siebtrommel wirkt deren stetiger Umlauf wirkungsvoll entgegen, wobei als zusätzliche Maßnahme ein Abstreifer für die Siebtrommel vorgesehen sein kann. Dieser Abstreifer sollte sich über die gesamte Länge der Siebtrommel erstrecken und mittels Spannfedern an die Außenseite der Siebtrommel angedrückt sein. Der Abstreifer kann wie eine Messerklinge dickflüssige Bestandteile der Gülle von der Siebtrommel abstreifen, wobei der Abstreifer eine der Siebtrommel entsprechende Kreisbogenform haben kann. Zweckmäßigerweise ist der von Spannfedern beaufschlagte Abstreifer von der Außenseite der Vorrichtung aus nachspannbar.

Bei einem anderen Ausführungsbeispiel weist die zylindrische Wandung der Siebtrommel Öffnungen auf, deren Durchgangsquerschnitte von der abgeschlossenen Stirnseite der Wandung beginnend zur gegenüberliegenden Stirnseite hin immer kleiner werdend ausgeführt sind. Dabei ist die abschließende Stirnseite mit Hilfe einer außerhalb des Absetzbeckens angeordneten Vorrichtung auf der Siebtrommelwelle beweglich und in Richtung der offenen Stirnseite verschiebbar angeordnet. Durch die verschiebbare Stirnseite der Siebtrommel wird erreicht, daß größere Durchgangsquerschnitte nicht mehr zum Einsatz kommen.

Die Erfindung schlägt ferner mit großem Vorteil vor, daß im Speicherbecken ein mit Schaufeln versehenes Rührwerk angeordnet ist. Damit wird die im Speicherbecken befindliche Gülle, die bekanntermaßen aus Kot und Urin besteht, stetig durchgerührt, wobei ein Absetzen von Kot im unteren Bereich des Speicherbeckens vermieden ist. Die Schaufeln des Rührwerks können an der Siebtrommelwelle angebracht sein, so daß sie zusammen mit der Siebtrommel in dem benachbarten Becken stetig mit geringer Geschwindigkeit umlaufen.

Die Oberseite der erfindungsgemäßen Vorrichtung kann durch eine Wand verschlossen sein, die im Bereich des Absetzbeckens eine Eintrittsöffnung für die Gülle und im Bereich des Speicherbeckens eine Öffnung zur Aufnahme des Saugrohrs der Güllepumpe aufweist.

Die Erfindung wird nachstehend anhand eines bevorzugten Ausführungsbeispiels mit Bezug auf die Zeichnung erläutert. Dabei zeigen:

Fig. 1    eine teilweise geschnittene Seitenansicht der erfindungsgemäßen Vorrichtung;

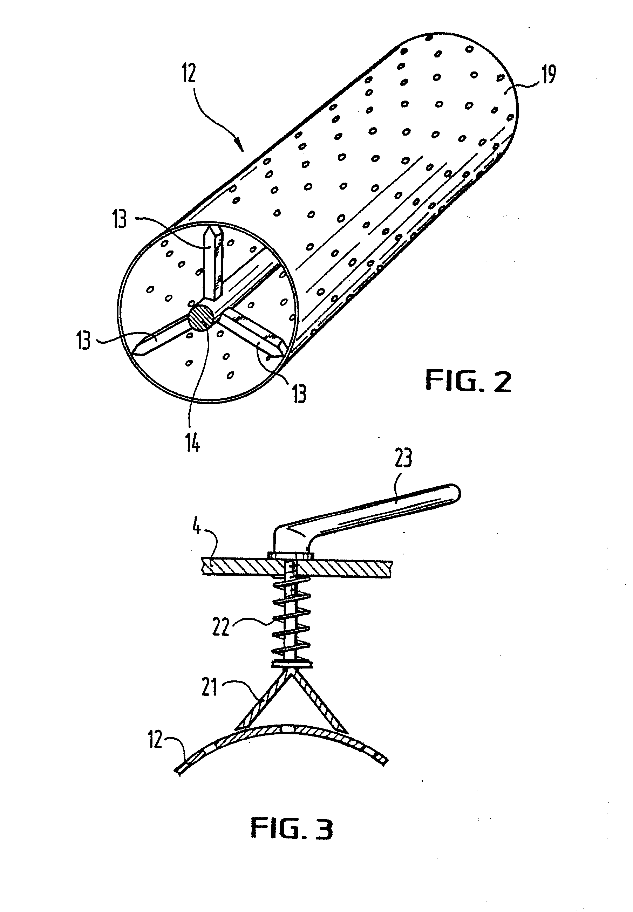

Fig. 2    eine perspektivische Ansicht der Siebtrommel;

Fig. 3    eine Querschnittsansicht des Abstreifers für die Siebtrommel und

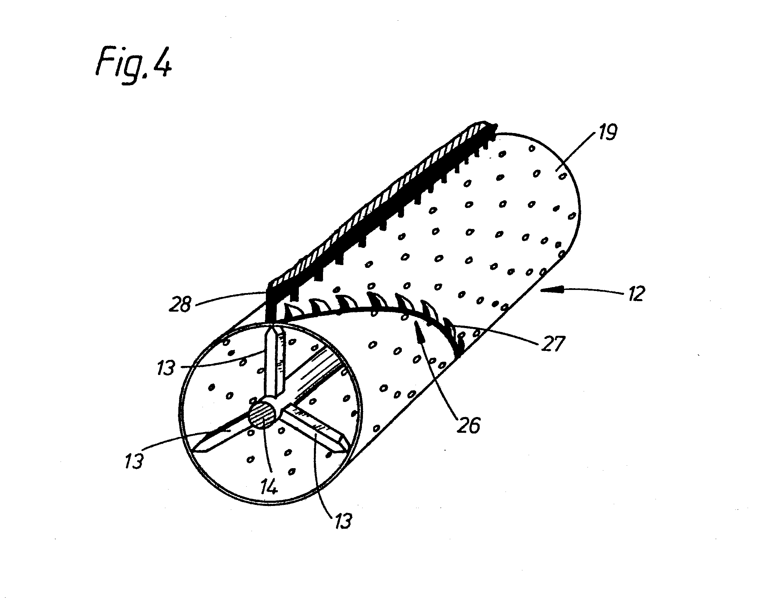

Fig. 4    eine perspektivische Ansicht der Siebtrommel mit einer Schneidvorrichtung.

Die in Fig. 1 dargestellte Vorrichtung 1 zum Abscheiden fester Gegenstände aus Gülle enthält einen Behälter mit einer Bodenwand 2, Seitenwänden 3 und einer oberen Wand 4. Der Behälter 2 ist mittels einer Trennwand 5 in ein Absetzbecken 6 und ein Speicherbecken 7 geteilt. In der oberen Wand 4 befindet sich oberhalb des Absetzbeckens 6 eine Eintrittsöffnung 8 für die Gülle, die von einem Güllebehälter oder direkt von einem Stall zugeführt wird, während oberhalb des Speicherbeckens 7 eine Öffnung 9 zur Aufnahme des Saugrohres 10 einer nicht dargestellten Güllepumpe ausgebildet ist.

Im oberen Bereich der Zwischenwand 5 ist eine Durchlaßöffnung 11 ausgebildet, mit der eine Abscheideeinrichtung in Form einer umlaufenden Siebtrommel 12 verbunden ist. Die Siebtrommel 12 ist mittels sternförmig angeordneter Arme 13 auf einer umlaufenden Welle 14 befestigt, die sich über die gesamte Länge des Behälters 2 erstreckt und mit einem Endabschnitt 15 aus einer Seitenwand 3 herausragt. Die Welle 14 ist an dem überstehenden Kopfende mit einer Riemenscheibe 16 versehen, die über einen Antriebsriemen 17 von einem Motor 18 ständig angetrieben wird.

Die Siebtrommel 12 hat eine langgestreckte zylindrische Wandung 19, die mit zahlreichen Durchgangsquerschnitten versehen ist. Ein stirnseitiger Endabschnitt der zylindrischen Wandung 19 greift in die Durchlaßöffnung 11 der Trennwand 5 ein, wobei zwischen der Wandung 19 und dem Rand der Durchlaßöffnung 11 eine Dichtung 20 angeordnet ist. Die andere Stirnseite der Siebtrommel 12 ist durch eine Stirnwand verschlossen.

Oberhalb der Siebtrommel 12 ist ein Abstreifer 21 an der oberen Wand 4 befestigt. Der Abstreifer 21 wird mittels Spannfedern 22 gegen die Wandung 19 der Siebtrommel 12 gedrückt und streift dickflüssige und feste Substanzen von der sich stetig drehenden Siebtrommel 12 ab. Der Abstreifer 21 ist mittels Spanneinrichtungen 23 von außen nachspannbar.

In einer anderen Ausführung weist die Siebtrommel 12 eine Schneidvorrichtung auf, welche aus einem ortsfesten Teil 28 und einem beweglichen Teil 26 besteht. Der bewegliche Teil 26 der Schneidvorrichtung ist spiralförmig an der zylindrischen Wandung 19 der Siebtrommel 12 befestigt und weist eine Anzahl Schneidzähne 27 auf. Die Schneidzähne 27 greifen bei Betrieb der Siebtrommel 12 in den ortsfesten Teil 28 der Schneidvorrichtung, der parallel zur Siebtrommelwelle 14 so angeordnet ist, daß jeder Schneidzahn 27 eine ihm zugeordnete Öffnung des ortsfesten Teiles 28 der Schneidvorrichtung durchläuft, und ohne daß dabei zwischen den Schneidzähnen 27 und den Öffnungen des ortsfesten Teils 28 der Schneidvorrichtung zu viel Platz gelassen wird. Längliches Material wird dann von den Schneidzähnen 27 gegriffen und mit Hilfe der Schneidvorrichtung zerkleinert, so daß es ggf. auch durch die Durchgangsquerschnitte der Siebtrommel 12 in das Speicherbecken 7 gelangen kann.

Im Speicherbecken 7 ist ein mit Schaufeln 24 versehenes Rührwerk angeordnet. Die Schaufeln 24 sind ebenfalls an der Welle 14 befestigt, so daß sie zusammen mit der Siebtrommel 12 stetig umlaufen. Die umlaufenden Schaufeln 24 verhindern, daß sich im Speicherbecken 7 die schwereren Bestandteile der Gülle absetzen, während das Umlaufen der Siebtrommel einem Zusetzen der Löcher der zylindrischen Wandung 19 entgegenwirkt.

Der Saugstutzen 25 der nicht dargestellten Güllepumpe ist im Bereich des Bodens des Speicherbeckens 7 angeordnet, so daß im praktischen Betrieb der Vorrichtung ständig Gülle abgesaugt werden kann.

Die mit der der Vorrichtung 1 zugeführten Gülle durch die Eintrittsöffnung 8 in das Absetzbecken 6 gelangten festen Gegenstände setzen sich entweder am Boden ab oder werden, wenn sie ein geringeres spezifisches Gewicht als die Gülle haben, durch die Siebtrommel 12 am Eintritt in das Speicherbecken 7 gehindert. Damit ist mit Sicherheit ausgeschlossen, daß feste Gegenstände einer den Lochdurchmesser der Siebtrommel 12 überschreitenden Größe von der der Vorrichtung 1 nachgeschalteten Güllepumpe angesaugt werden und diese beschädigen.

Patentansprüche:

1. Vorrichtung zum Abscheiden fester Gegenstände aus Gülle, dadurch gekennzeichnet, daß die Vorrichtung (1) in Fließrichtung der Gülle einer Güllepumpe vorgeordnet ist.

2. Vorrichtung nach Anspruch 1, dadurch gekennzeichnet, daß sie ein mit einem Güllebehälter oder einem Stall verbundenes Absetzbecken (6) und ein durch eine Zwischenwand (5) abgetrenntes, mit der Güllepumpe verbundenes Speicherbecken (7) aufweist.

3. Vorrichtung nach Anspruch 2, dadurch gekennzeichnet, daß das Absetzbecken (6) und das Speicherbecken (7) über eine in der Zwischenwand (5) ausgebildete Durchlaßöffnung (11) und eine damit verbundene Abscheideeinrichtung (12) für die festen Gegenstände miteinander in Verbindung stehen.

4. Vorrichtung nach Anspruch 3, dadurch gekennzeichnet, daß die Abscheideeinrichtung eine auf einer umlaufenden Welle (14) befestigte Siebtrommel (12) ist, die in dem Absetzbecken (6) angeordnet ist und mit einem stirnseitigen Endabschnitt ihrer zylindrischen Wandung (19) dicht mit dem Rand der Durchlaßöffnung (11) abschließt.

5. Vorrichtung nach Anspruch 4, dadurch gekennzeichnet, daß die andere Stirnseite der Siebtrommel (12) durch eine Stirnwand verschlossen ist.

6. Vorrichtung nach Anspruch 4 oder 5, dadurch gekennzeichnet, daß die Siebtrommel (12) eine langgestreckte zylindrische Wandung (19) aufweist, über deren gesamten Mantelfläche verteilt Öffnungen angeordnet sind.

7. Vorrichtung nach Anspruch 6,
dadurch gekennzeichnet, daß die Öffnungen von kreisförmigen Löchern gleichen Durchmessers gebildet sind.

8. Vorrichtung nach einem der Ansprüche 4 bis 6,
dadurch gekennzeichnet, daß die Durchgangsquerschnitte der Öffnungen in der Mantelfläche, von der abgeschlossenen Stirnwand aus gesehen, zum anderen Ende der Siebtrommel hin abnehmen.

9. Vorrichtung nach Anspruch 8,
dadurch gekennzeichnet, daß die abschließende Stirnseite der Siebtrommel durch eine Vorrichtung zur gegenüberliegenden, offenen Stirnseite hin verschiebbar angeordnet ist.

10. Vorrichtung nach einem der Ansprüche 1 bis 6,
dadurch gekennzeichnet, daß ein Abstreifer (21) für die Siebtrommel (12) vorgesehen ist.

11. Vorrichtung nach Anspruch 7,
dadurch gekennzeichnet, daß sich der Abstreifer (21) im wesentlichen über die gesamte Länge der Siebtrommel (12) erstreckt.

12. Vorrichtung nach Anspruch 7 oder 8,
dadurch gekennzeichnet, daß der Abstreifer (21) mittels Spannfedern (22) an die Außenseite der Siebtrommel (12) angedrückt ist.

13. Vorrichtung nach einem der Ansprüche 2 bis 9,
dadurch gekennzeichnet, daß im Speicherbecken (7) ein mit Schaufeln (24) versehenes Rührwerk angeordnet ist.

14. Vorrichtung nach Anspruch 10,
dadurch gekennzeichnet, daß die Schaufeln (24) an der Siebtrommelwelle (14) angebracht sind.

15. Vorrichtung nach einem der Ansprüche 1 bis 11, dadurch gekennzeichnet, daß der Saugstutzen (25) der Güllepumpe im oberen Bereich des Speicherbeckens (7) angeordnet ist.

16. Vorrichtung nach einem der Ansprüche 1 bis 12, dadurch gekennzeichnet, daß die Oberseite der Vorrichtung (1) durch eine Wand (4) abgedeckt ist, die im Bereich des Absetzbeckens (6) eine Eintrittsöffnung (8) für die Gülle und im Bereich des Speicherbeckens (7) eine Öffnung (9) zur Aufnahme des Saugrohrs (10) der Güllepumpe aufweist.

17. Vorrichtung nach einem der Ansprüche 1 bis 16, dadurch gekennzeichnet, daß eine im Bereich der Siebtrommel (12) angeordnete Schneidvorrichtung vorgesehen ist.

18. Vorrichtung nach Anspruch 17, dadurch gekennzeichnet, daß die Schneidvorrichtung aus einem mit der Trommel beweglichen Teil (26) und einem ortsfesten Teil (28) besteht.

19. Vorrichtung nach Anspruch 18, dadurch gekennzeichnet, daß der bewegliche Teil (26) der Schneidvorrichtung spiralförmig die zylindrische Wandung (19) der Siebtrommel (12) umgreift.

20. Vorrichtung nach Anspruch 19, dadurch gekennzeichnet, daß der bewegliche Teil (26) der Schneidvorrichtung eine Anzahl von einzelnen Schneidzähnen (27) aufweist.

21. Vorrichtung nach Anspruch 18, dadurch gekennzeichnet, daß der ortsfeste Teil (28) der Schneidvorrichtung parallel zur Siebtrommelwelle (14) angebracht ist und einzelne Öffnungen aufweist, die so ausgebildet sind, daß die Schneidzähne (27) gerade hindurchgreifen können.

**FIG. 1**

FIG. 2

FIG. 3

2/3

**Fig.4**